Europäisches Patentamt

(19) European Patent Office

Office européen des brevets

(11) Publication number: **0 001 008**
**A1**

(12) **EUROPEAN PATENT APPLICATION**

(21) Application number: 78300304.9

(22) Date of filing: 21.08.78

(51) Int. Cl.²: **H 01 G 7/02**

(30) Priority: 22.08.77 GB 35163/77

(71) Applicant: **Post Office, 23 Howland Street, London W1P 6HQ (GB)**

(72) Inventor: **Johnson, Edward George Thomas, Raedwald, Sutton Woodbridge Suffolk (GB)**
Inventor: **Blake, Robert George, 21 West Moorland Road, Felixstowe Suffolk (GB)**
Inventor: **Lord, George William, Silverbirch, Pettistree Woodbridge Suffolk (GB)**

(43) Date of publication of application: 07.03.79 Bulletin 79/5

(74) Representative: **Pike, Harold John et al, Abel & Imray Northumberland House 303-306 High Holborn, London, WC1V 7LH (GB)**

(84) Designated Contracting States: BE CH DE FR NL SE

(54) **Method and apparatus for implanting an electret charge in a foil material, and product produced thereby.**

(57) In order to implant an electret charge in a foil material in a manner which is simple susceptible to industrial application and provides uniform charging of the material, a strip of foil material (17) is passed over a knife edge (14) in intimate contact therewith. The foil material (17) has an electrically conducting backing layer (18) to which electrical connection is made via a roller (12). A voltage is applied between the knife edge (14) and the roller (12).

EP 0 001 008 A1

- 1 -

# METHOD AND APPARATUS FOR IMPLANTING AN ELECTRET CHARGE IN A FOIL MATERIAL, AND PRODUCT PRODUCED THEREBY.

This invention relates to a method and apparatus for implanting an electret charge in a foil material.

It has been proposed to implant an electret charge in an electret foil material using a corona discharge with the foil material acting as one electrode of the discharge. This method is successful but has to be carried out under very carefully controlled conditions in order that an even discharge takes place across the width of the foil. In order to provide uniformity of charge across the foil it may be necessary to provide a grid adjacent the surface of the foil. Because of the requirement of carefully controlled conditions this method of charge implantation is difficult to carry out as a continuous process on a commercial basis.

In British Patent Specification No. 1,135,737 in the name of Philip Morris Incorporated a brief reference is made to the possibility of implanting an electret charge in an electret foil material by passing a foil material over a charged belt the material being in contact with the belt. In this case, however, the foil material will not be pressed into intimate contact with the belt over the whole of the adjacent surfaces of the foil and belt and consequently the charging of the foil material will be uneven.

0001008

It is an object of the invention to provide an apparatus and method for implanting an electret charge in a foil material which mitigates the disadvantages described above.

According to the invention a method of implanting an electret charge in a foil material comprises the following steps:

providing a strip of electret foil material, passing the strip of foil material over an electrically conducting knife edge with the knife edge in intimate contact with one face of the foil material,

making electrical contact with the other face of the foil material adjacent the knife edge, and

applying a voltage between the knife edge and the other face of the foil material.

The use of a knife edge to make contact with the foil facilitates the making of intimate electrical contact with the strip of foil material across its entire width and thereby enables the electret charge to be implanted uniformly across the width of the foil material.

The electric field applied across the foil material may be in the range of 40 to 160 MV/m. The knife edge may be at a positive or negative potential according to the characteristics required of the charged foil. Usually the knife edge is maintained at a negative potential as this has been found to produce electret foils of superior performance.

The step of making electrical contact with the other face of the foil material may comprise providing a strip of electret foil material having an electrically conducting backing layer on said other face and making electrical contact with the backing layer. This enables electrical contact with the backing layer to be made at any position along the path of the foil material and not necessarily opposite the knife edge.

The potential, which is preferably earth potential, of the backing layer may be applied by passing the backing layer over an electrically conducting roller connected to the required potential.

The exposed face of the charged foil material may be electrically contacted with an earthed electrically conducting surface to remove/electrostatic charge from the foil; conveniently this electrical contact may be made by winding the charged foil onto a spool with the backing layer electrically connected to earth.

According to another aspect of the invention an apparatus for implanting an electret charge in a foil material comprises:

means· defining a path for a strip of foil material,

an electrically conducting knife edge arranged on one side of the path such that, in use, one face of a strip of foil material passing along the path passes over the knife edge in intimate contact therewith,

electrical contact means arranged on the other side of the path such that, in use, a strip/material passing along the path passes over the contact means in contact therewith and electrical contact is made with the other face of the strip of foil material adjacent the kinfe edge, and

means for applying a voltage between the knife edge and the electrical contact means.

The electret foil material may have an electrically conducting backing layer on one face and in this case the electrical contact means may comprise a roller made of electrically conducting material.

A first spool may be provided at the beginning of the path for storing a roll of foil material to be charged.

A second spool may be provided at the end of the path for receiving the foil material after charging and for storing the charged material as a roll. The second spool may be connected to drive means operative, in use, to rotate the spool and draw the foil material along the path. The first spool may be provided with a brake for tensioning the foil material along the path. Tensioning of the foil ensures that as the foil passes over the knife edge it makes intimate contact with the knife edge.

Guide means may be provided along the path to guide the foil along its path. The guide means may comprise one or more rollers or rods.

An electrostatic measuring probe may be located adjacent the path downstream of the knife edge to measure the effectiveness of implantation of charge.

By way of example an illustrative embodiment of the invention will now be described with reference to the accompanying drawings, of which:

Figure 1 is a partly schematic side view of an apparatus for implanting an electret charge in a foil, and

Figure 2 is a diagrammatic view illustrating the operation of the apparatus of Figure 1.

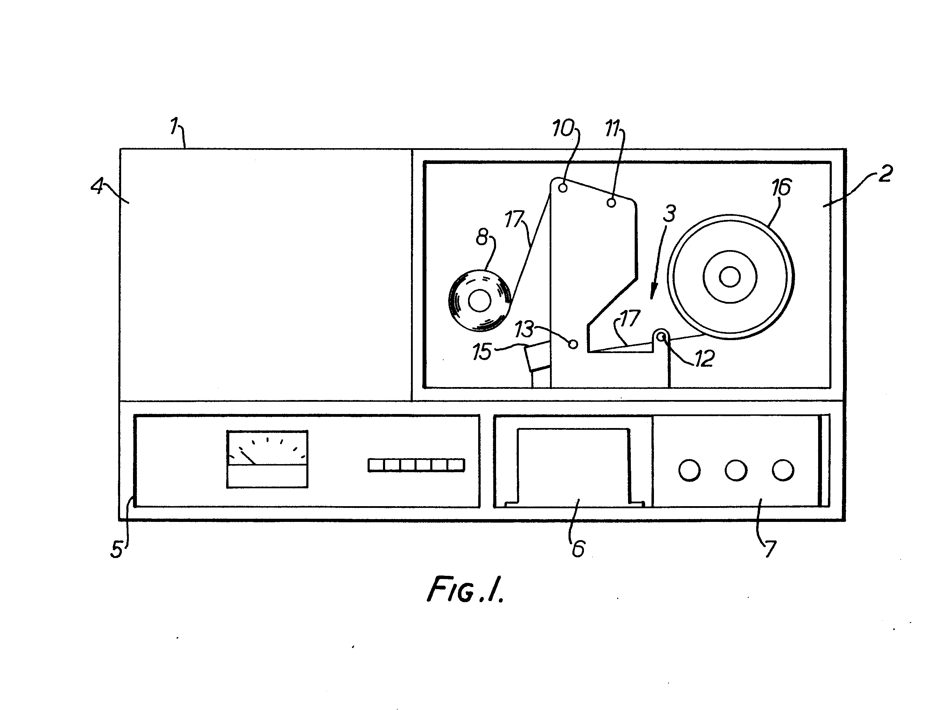

The apparatus shown in Figure 1 comprises a machine 1 having a chamber 2 in which the electret charge implanting part 3 of the machine is housed. A filtered air unit 4 communicates with the chamber 2 to maintain the space full of clean air. The base of the machine 1 houses a high voltage supply 5 incorporating a meter, a drive motor 6 and a motor control panel 7.

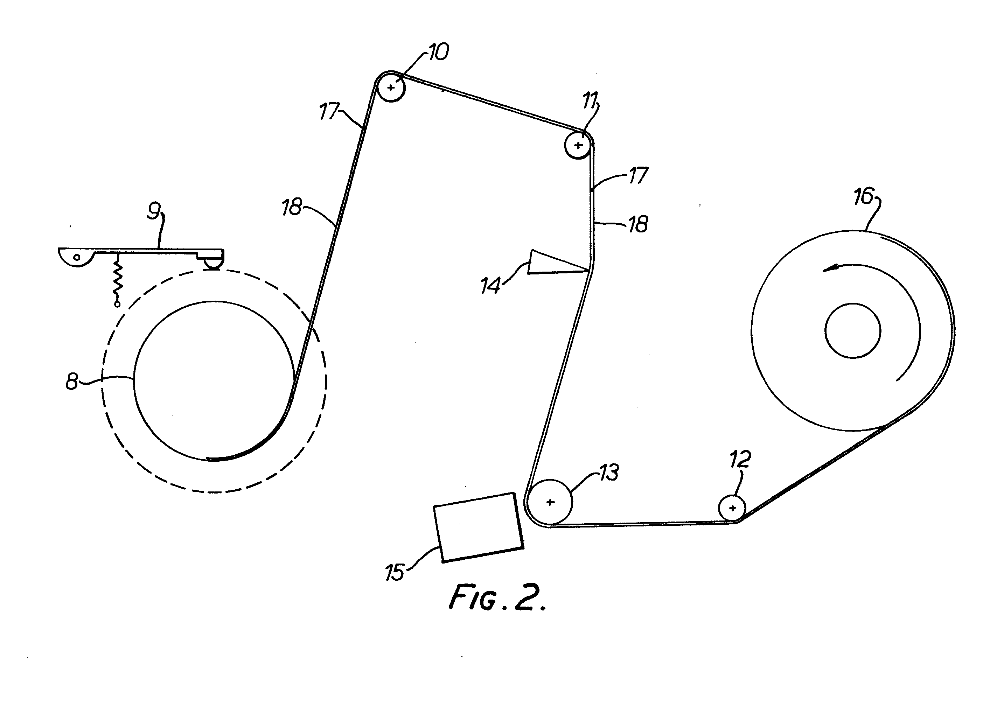

The electret charge implanting part 3 of the machine 1 is also shown in Figure 2 and comprises a foil supply spool 8 restrained by a brake 9, guide rollers 10, 11 and 12, an electrically conducting roller 13 electrically connected to earth, a knife edge 14, of electrically conducting material, an electrostatic measuring probe 15 and a take-up spool 16. The rollers 10 and 11 are made of a material selected so as to produce minimal contact electrification of the electret foil as it passes over the rollers; such a selection is made according to the material to be charged. An electret foil 17 is wound on the supply spool 8 and has an aluminised surface on its face 18 which is located on the inner side of the foil 17 when the foil is on the supply spool 8. The foil 17 passes from the supply spool 8 over the guide rollers 10 and 11, over the knife edge 14 around the earthed roller 13, under the guide roller 12 and onto the take-up spool 16.

The operation of charging the foil is carried out as a continuous process. The foil 17 is drawn from the supply spool 8 under tension controlled by the brake 9 by rotation of the take-up spool 16 driven by the motor 6. The foil is guided by the rollers 10 and 11 and passes over the knife edge 14 which protrudes into the straight line path between the rollers 11 and 13 thus ensuring that the knife edge makes intimate contact with the exposed surface of the electret material; the pressure of this contact can be adjusted by adjusting the brake 9. The knife edge 14 is electrically connected to the high voltage supply and is maintained at a potential of between 500 and 2,000 volts positive or negative with respect to earth potential according to the setting of the high voltage supply.

After passing over the knife edge, which extends across the entire width of the foil, the foil 17 passes around the roller 13 which electrically contacts the aluminised face 18 of the foil and thus ensures that the aluminised face of the foil is maintained at earth potential, not only in the vicinity of the roller 13 but along the entire length of the foil.

For example, if the foil 17 is 12.7 $\mu$m thick, then with the knife edge maintained at 500 volts a field of about 40 MV/m is applied across the foil and with the knife edge maintained at 2,000 volts a field of 160 MV/m is applied across the foil.

After passing under the guide roller 12 the foil is wound onto the take-up spool 16 where the electrostatic portion of the charge in the electret material of the foil 17 leaks to earth by virtue of the contact of the electret material in one layer of foil wound on the spool with the aluminsed surface of an adjacent layer of foil wound on the spool.

The speed at which the foil 17 is drawn onto the take-up spool 16 may be varied by operator adjustment at the control panel 7 in order to give optimum charging conditions. The efficiency of the charging process is monitored by the electrostatic measuring probe 15 which is able to scan the complete width of the foil.

In one particular example of the invention the foil is 12.7 μm thick, 75 mm wide and is aluminsed to a thickness of about 1,000 Ångstroms on one side; the electret material is polytetrafluoroethylene (for example that known and sold as FEP Teflon (RTM) foil) and the rollers 10 and 11 are polished brass rollers. Margins of 5 mm width are left unaluminised at both edges of the strip to avert electrostatic breakdown of foil during charging. Alternative electret materials which may for example be used are polycarbonates or Mylar (RTM).

While one particular method and apparatus for implanting an electret charge in a material have been described, it should be understood that various modifications may be made. For example, the electret material may be any material capable of exhibiting electret properties; the face 18 of the foil may be metallised with a metal other than aluminium; various thicknesses and widths of foil may be treated and the thickness of the metallisation may be varied according to the purpose for which the electret foil is required. The arrangement of the rollers 10 and 11 may be replaced by non-rotatable rods.

In the described embodiment the electret foil material being charged is provided with an electrically conducting backing layer. However the invention may be applied to charging electret foil material without such a backing layer; in this case electrical contact is made with the back face of the foil material close to the knife edge. Preferably contact is made directly opposite the knife

0001008

edge but contact may be made a small distance from the knife edge without critically affecting the charging of the foil.

The method and apparatus are advantageous in that they give greater uniformity of charge in the electret foil both along and across the strip of foil. Also it has been found that the lifetime of electret foils produced in this manner is increased. Furthermore the fact that the charging of the foil can be conducted under ambient conditions and the continuous nature of the process are well suited to production processes.

The uses of electret foil material are well known. The material may for example be used as the diaphragm of an electroacoustic transducer. The electroacoustic transducer may be incorporated in a telephone.

Claims:

1.      A method of implanting an electret charge in a foil material, comprising the following steps:

providing a strip of electret foil material (17), passing the strip of foil material over an electrically conducting member with the member adjacent one face of the foil material,

making electrical contact with the other face of the foil material adjacent the electrically conducting member, and

applying a voltage between the electrically conducting member and the other face of the foil material, characterized in that the step of passing the strip of foil material (17) over an electrically conducting member consists of passing the strip of foil material over an electrically conducting knife edge (14) with the knife edge in intimate contact with said one face of the foil material.

2.      A method according to claim 1 further characterized in that the electric field applied across the foil material is in the range of 40 to 160 MV/m.

3.      A method according to claim 1 or 2 further characterized in that the step of making electrical contact with the other face of the foil material (17) comprises providing a strip of electret foil material having an electrically conducting backing layer (18) on said other face and making electrical contact with the backing layer.

4.      A method according to claim 3 further characterized in that the potential of the backing layer (18) is applied by passing the backing layer over an electrically conducting roller (13) connected to the required potential.

5.      A method according to claim 3 or 4 further characterized in that the exposed face of the charged foil material is electrically contacted with an earthed electrically conducting surface/to remove/electrostatic charge from the foil. (16,18) surface

6.      An electret foil material having an electret charge which has been implanted by a method according to any preceding claim.

7.      An apparatus for implanting an electret charge in a foil material comprising:

means (8,10,11,12,16) defining a path for a strip of foil material,

an electrically conducting member arranged on one side of the path such that, in use, one face of a strip of foil material (17) passing along the path passes over the member,

electrical contact means (13) arranged on the other side of the path such that, in use, a strip of material passing along the path passes over the contact means in contact therewith and electrical contact is made with the other face of the strip of foil material adjacent the member, and

means (5) for applying a voltage between the electrically conducting member and the electrical contact means,

characterized in that the electrically conducting member has a knife edge (14) arranged on said one side of the path such that, in use, one face of the strip of foil material (17) passing along the path passes over the knife edge in intimate contact therewith.

8.      An apparatus according to claim 7 further characterized in that the electrical contact means (13) comprises a roller made of electrically conducting material for contacting an electrically conducting backing layer on said other face of the foil material.

9.      An apparatus according to claim 7 or 8 further characterized in that a first spool (8) is provided at the beginning of the path for storing a roll of foil material (17) to be charged.

10.     An apparatus according to claim 9 further characterized in that a second spool (16) is provided at the end of

0001008

the path for receiving the foil material (17) after charging and for storing the charged material as a roll.

11. An apparatus according to claim 10 further characterized in that the second spool (16) is connected to drive means (6) operative, in use, to rotate the second spool and draw the foil material (17) along the path.

12. An apparatus according to claim 10 or 11 further characterized in that the first spool (8) is provided with a brake (9) for tensioning the foil material (17) along the path.

13. An apparatus according to any of claims 7 to 12 further characterized in that guide means (10,11,12) are provided along the path to guide the foil material along its path.

14. Apparatus according to claim 13 further characterized in that the guide means (10,11,12) comprises one or more rollers or rods.

15. An apparatus according to any of claims 7 to 14 further characterized in that an electrostatic measuring probe (15) is located adjacent the path downstream of the knife edge (14) to measure the effectiveness of implantation of charge.

0001008

Fig.l.

Fig. 2.

| Category | Citation of document with indication, where appropriate, of relevant passages | Relevant to claim |
|---|---|---|
| X | FR - A - 1 349 010 (DU PONT DE NEMOURS) <br> * page 2, column 2, paragraphs 4,5; page 3, column 1, paragraph 1; abstract; figure 1 * | 1,3,6, 7,9,10, 14 |
| A | GB - A - 1 135 737 (PH. MORRIS INC) <br> * claims; figure 6 * | 1 |
| A | US - A - 3 985 914 (KUREHA KAGAKU KOGYO K.K.) <br> * column 4, lines 21-43; claims; figure 3 * | 13,14 |

## DOCUMENTS CONSIDERED TO BE RELEVANT

**CLASSIFICATION OF THE APPLICATION (Int. Cl.²)**

H 01 G 7/02

**TECHNICAL FIELDS SEARCHED (Int.Cl.²)**

H 01 G 7/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 23-11-1978 | VAN REETH |

EPO Form 1503.1 06.78